# EUROPEAN PATENT APPLICATION

(11) **EP 4 394 711 A1**
(43) Date of publication of application: **03.07.2024**
(21) Application number: 23769686.9
(22) Date of filing: 10.03.2023
(51) Int. Cl.: G06T 15/00

(54) **RENDERING MODEL TRAINING METHOD AND APPARATUS, VIDEO RENDERING METHOD AND APPARATUS, AND DEVICE AND STORAGE MEDIUM**

(30) Priority: 18.03.2022 CN 202210273192
(71) Applicant: Huawei Technologies Co., Ltd., Shenzhen, Guangdong 518129 (CN)
(72) Inventor: ZHANG, Ziyang, Shenzhen, Guangdong 518129 (CN); WANG, Yaoyuan, Shenzhen, Guangdong 518129 (CN); LI, Minglei, Shenzhen, Guangdong 518129 (CN); HE, Weihua, Shenzhen, Guangdong 518129 (CN); ZHANG, Yuhan, Shenzhen, Guangdong 518129 (CN); CHENG, Jie, Shenzhen, Guangdong 518129 (CN)
(74) Representative: Gill Jennings & Every LLP
(86) International application number: PCT/CN2023/080880
(87) International publication number: WO 2023/174182

(57) **Abstract**

This application discloses a rendering model training method and apparatus, a video rendering method and apparatus, a device, and a storage medium, and belongs to the field of image processing technologies. The rendering model training method includes: obtaining a first video including a face of a target object (201); mapping a facial action of the target object in the first video based on a three-dimensional face model, to obtain a second video including a three-dimensional face (202); and training an initial rendering model by using the second video as an input of the initial rendering model and using the first video as supervision of an output of the initial rendering model, to obtain a target rendering model (203). The second video generated based on the three-dimensional face model is used as a sample for training the rendering model, so as to avoid recording a large quantity of low-definition videos because of high recording requirements before the rendering model is trained, thereby reducing computing resources and time required for training the rendering model.

## Description

This application claims priority to Chinese Patent Application No. 202210273192.8, filed on March 18, 2022 and entitled "RENDERING MODEL TRAINING METHOD AND APPARATUS, VIDEO RENDERING METHOD AND APPARATUS, DEVICE, AND STORAGE MEDIUM", which is incorporated herein by reference in its entirety.

### TECHNICAL FIELD

This application relates to the field of image processing technologies, and in particular, to a rendering model training method and apparatus, a video rendering method and apparatus, a device, and a storage medium.

### BACKGROUND

With development of image processing technologies, definition of a video obtained through rendering of a rendering model is increasingly high. How to obtain the rendering model through training becomes a key to obtaining a high-definition video through rendering.

In the conventional technology, to obtain a high-definition video through rendering of a rendering model, a large quantity of low-definition videos and a large quantity of high-definition videos need to be recorded based on high recording requirements. The low-definition video is a video whose definition is lower than a threshold, and the high-definition video is a video whose definition is higher than the threshold. Then, the rendering model is trained by using the low-definition videos as sample videos input into the rendering model and using the high-definition videos corresponding to the low-definition videos as supervised videos, so that a video corresponding to definition of the supervised video can be obtained through rendering of a trained rendering model.

In the foregoing training manner, when the rendering model is trained, the large quantity of high-definition videos and the large quantity of low-definition videos need to be recorded based on the high recording requirements. Consequently, it is difficult to obtain samples, and training the rendering model requires a large quantity of computing resources and long time.

### SUMMARY

This application provides a rendering model training method and apparatus, a video rendering method and apparatus, a device, and a storage medium, to resolve a problem in a conventional technology. Technical solutions are as follows:

According to a first aspect, a rendering model training method is provided. The method includes: obtaining a first video including a face of a target object; mapping a facial action of the target object in the first video based on a three-dimensional face model, to obtain a second video including a three-dimensional face; and training an initial rendering model by using the second video as an input of the initial rendering model and using the first video as supervision of an output of the initial rendering model, to obtain a target rendering model.

According to the technical solution provided in this application, the three-dimensional face model is introduced, and the second video that is generated based on the three-dimensional face model and that includes the three-dimensional face is used as a sample for training the rendering model, so as to avoid recording a large quantity of low-definition videos because of high recording requirements before the rendering model is trained, thereby reducing computing resources and time used for training the rendering model. In addition, the target rendering model obtained through training can have a high generalization capability by introducing the three-dimensional face model.

In a possible implementation, the mapping a facial action of the target object in the first video based on a three-dimensional face model, to obtain a second video including a three-dimensional face includes: extracting facial key points of the target object in each frame of the first video, to obtain a plurality of groups of facial key points, where a quantity of groups of facial key points is the same as a quantity of frames of the first video, and one frame corresponds to one group of facial key points; fitting the three-dimensional face model with each group of facial key points to obtain a plurality of three-dimensional facial pictures; and combining the plurality of three-dimensional facial pictures based on a correspondence between each of the three-dimensional facial pictures and each frame of the first video, to obtain the second video including the three-dimensional face.

The facial key points have good stability. Therefore, when definition of the first video is low, the facial key points of the target object can be well extracted from the first video, and then the extracted facial key points of the target object are fitted with the three-dimensional face model to obtain the second video. This improves reliability of obtaining the second video.

In a possible implementation, the fitting the three-dimensional face model with each group of facial key points to obtain a plurality of three-dimensional facial pictures includes: fitting the three-dimensional face model with each group of facial key points by using a neural network, to obtain the plurality of three-dimensional facial pictures.

In a possible implementation, the training an initial rendering model by using the second video as an input of the initial rendering model and using the first video as supervision of an output of the initial rendering model, to obtain a target rendering model includes: inputting the second video into the initial rendering model, and rendering the second video by using the initial rendering model to obtain a third video; calculating a similarity between each frame of the first video and each frame of the third video; and adjusting a parameter of the initial rendering model based on the similarity, and using an initial rendering model obtained after the parameter adjusting as the target rendering model.

The rendering model is trained by using the second video generated in a manner of extracting the facial key points, so that the trained rendering model has a better generalization capability.

In a possible implementation, the adjusting a parameter of the initial rendering model based on the similarity, and using an initial rendering model obtained after the parameter adjusting as the target rendering model includes: adjusting a weight of a pre-training layer in the initial rendering model based on the similarity, and using an initial rendering model obtained after the weight adjusting as the target rendering model, where the pre-training layer is at least one network layer in the initial rendering model, and a quantity of network layers included in the pre-training layer is less than a total quantity of network layers in the initial rendering model. A parameter of the pre-training layer is adjusted, so that a computing resource required when the rendering model is adjusted can be reduced, training of the rendering model can be completed more quickly, and training efficiency is improved.

In a possible implementation, the using an initial rendering model obtained after the parameter adjusting as the target rendering model includes: using the initial rendering model obtained after the parameter adjusting as the target rendering model in response to a similarity between each frame of a video generated based on the initial rendering model obtained after the parameter adjusting and each frame of the first video being not less than a similarity threshold.

In a possible implementation, the obtaining a first video including a face of a target object includes: obtaining a fourth video including the target object; and cropping each frame of the fourth video, and reserving a facial region of the target object in each frame of the fourth video, to obtain the first video. The first video including the face of the target object is cropped from the fourth video including the target object, and the facial action of the target object is represented by using the first video. Therefore, extraction of the facial key points of the target object can be completed when fewer computing resources are used.

According to a second aspect, a video rendering method is provided. The method includes: obtaining a to-be-rendered video including a target object; mapping a facial action of the target object in the to-be-rendered video based on a three-dimensional face model, to obtain an intermediate video including a three-dimensional face; obtaining a target rendering model corresponding to the target object; and rendering the intermediate video based on the target rendering model, to obtain a target video.

The three-dimensional face model is introduced to help render the to-be-rendered video, so that when definition of the to-be-rendered video is low, the target video can still be well obtained through rendering of the target rendering model.

In a possible implementation, the obtaining a to-be-rendered video including a target object includes: obtaining a virtual object generation model established based on the target object; and generating the to-be-rendered video based on the virtual object generation model.

In a possible implementation, the generating the to-be-rendered video based on the virtual object generation model includes: obtaining text for generating the to-be-rendered video; converting the text into a speech of the target object, where content of the speech corresponds to content of the text; obtaining at least one group of lip synchronization parameters based on the speech; inputting the at least one group of lip synchronization parameters into the virtual object generation model, where the virtual object generation model drives a face of a virtual object corresponding to the target object to perform a corresponding action based on the at least one group of lip synchronization parameters, to obtain a virtual video corresponding to the at least one group of lip synchronization parameters; and rendering the virtual video to obtain the to-be-rendered video.

In a possible implementation, the rendering the intermediate video based on the target rendering model, to obtain a target video includes: rendering each frame of the intermediate video based on the target rendering model, to obtain rendered pictures with a same quantity as frames of the intermediate video; and combining the rendered pictures based on a correspondence between each of the rendered pictures and each frame of the intermediate video, to obtain the target video.

In a possible implementation, the mapping a facial action of the target object in the to-be-rendered video based on a three-dimensional face model, to obtain an intermediate video including a three-dimensional face includes: cropping each frame of the to-be-rendered video, and reserving a facial region of the target object in each frame of the to-be-rendered video, to obtain a face video; and mapping the facial action of the target object in the face video based on the three-dimensional face model, to obtain the intermediate video. The face video is obtained by cropping the to-be-rendered video, and then the facial action of the target object in the face video is mapped based on the three-dimensional face model. Therefore, mapping of the facial action of the target object can be completed when few computing resources are used.

According to a third aspect, a rendering model training apparatus is provided. The apparatus includes:
an obtaining module, configured to obtain a first video including a face of a target object;
a mapping module, configured to map a facial action of the target object in the first video based on a three-dimensional face model, to obtain a second video including a three-dimensional face; and
a training module, configured to train an initial rendering model by using the second video as an input of the initial rendering model and using the first video as supervision of an output of the initial rendering model, to obtain a target rendering model.

In a possible implementation, the mapping module is configured to: extract facial key points of the target object in each frame of the first video, to obtain a plurality of groups of facial key points, where a quantity of groups of facial key points is the same as a quantity of frames of the first video, and one frame corresponds to one group of facial key points; fit the three-dimensional face model with each group of facial key points to obtain a plurality of three-dimensional facial pictures; and combine the plurality of three-dimensional facial pictures based on a correspondence between each of the three-dimensional facial pictures and each frame of the first video, to obtain the second video including the three-dimensional face.

In a possible implementation, the mapping module is configured to fit the three-dimensional face model with each group of facial key points by using a neural network, to obtain the plurality of three-dimensional facial pictures.

In a possible implementation, the training module is configured to: input the second video into the initial rendering model, and render the second video by using the initial rendering model to obtain a third video; calculate a similarity between each frame of the first video and each frame of the third video; and adjust a parameter of the initial rendering model based on the similarity, and use an initial rendering model obtained after the parameter adjusting as the target rendering model.

In a possible implementation, the training module is configured to: adjust a weight of a pre-training layer in the initial rendering model based on the similarity, and use an initial rendering model obtained after the weight adjusting as the target rendering model, where the pre-training layer is at least one network layer in the initial rendering model, and a quantity of network layers included in the pre-training layer is less than a total quantity of network layers in the initial rendering model.

In a possible implementation, the training module is configured to use the initial rendering model obtained after the parameter adjusting as the target rendering model in response to a similarity between each frame of a video generated based on the initial rendering model obtained after the parameter adjusting and each frame of the first video being not less than a similarity threshold.

In a possible implementation, the obtaining module is configured to: obtain a fourth video including the target object; and crop each frame of the fourth video, and reserve a facial region of the target object in each frame of the fourth video, to obtain the first video.

According to a fourth aspect, a video rendering apparatus is provided. The apparatus includes:
an obtaining module, configured to obtain a to-be-rendered video including a target object;
a mapping module, configured to map a facial action of the target object in the to-be-rendered video based on a three-dimensional face model, to obtain an intermediate video including a three-dimensional face, where
the obtaining module is further configured to obtain a target rendering model corresponding to the target object; and
a rendering module, configured to render the intermediate video based on the target rendering model, to obtain a target video.

In a possible implementation, the obtaining module is configured to: obtain a virtual object generation model established based on the target object; and generate the to-be-rendered video based on the virtual object generation model.

In a possible implementation, the obtaining module is configured to: obtain text for generating the to-be-rendered video; convert the text into a speech of the target object, where content of the speech corresponds to content of the text; obtain at least one group of lip synchronization parameters based on the speech; input the at least one group of lip synchronization parameters into the virtual object generation model, where the virtual object generation model drives a face of a virtual object corresponding to the target object to perform a corresponding action based on the at least one group of lip synchronization parameters, to obtain a virtual video corresponding to the at least one group of lip synchronization parameters; and render the virtual video to obtain the to-be-rendered video.

In a possible implementation, the rendering module is configured to: render each frame of the intermediate video based on the target rendering model, to obtain rendered pictures with a same quantity as frames of the intermediate video; and combine the rendered pictures based on a correspondence between each of the rendered pictures and each frame of the intermediate video, to obtain the target video.

In a possible implementation, the mapping module is configured to: crop each frame of the to-be-rendered video, and reserve a facial region of the target object in each frame of the to-be-rendered video, to obtain a face video; and map the facial action of the target object in the face video based on the three-dimensional face model, to obtain the intermediate video.

According to a fifth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, so that the processor performs the method in any one of the first aspect or the possible implementations of the first aspect, or the method in any one of the second aspect or the possible implementations of the second aspect.

According to a sixth aspect, another communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, so that the processor performs the method in any one of the first aspect or the possible implementations of the first aspect, or the method in any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a seventh aspect, a communication system is provided. The system includes the apparatus in any one of the third aspect or the possible implementations of the third aspect, and the apparatus in any one of the fourth aspect or the possible implementations of the fourth aspect.

According to an eighth aspect, a computer program (product) is provided. The computer program (product) includes computer program code; and when the computer program code is run by a computer, the computer is enabled to perform the methods in the foregoing aspects.

According to a ninth aspect, a computer-readable storage medium is provided. The computer-readable storage medium stores a program or instructions. When the program or the instructions is/are run on a computer, the methods in the foregoing aspects are performed.

According to a tenth aspect, a chip is provided, including a processor, configured to invoke instructions from a memory and run the instructions stored in the memory, so that a communication device on which the chip is installed is enabled to perform the methods in the foregoing aspects.

According to an eleventh aspect, another chip is provided, including an input interface, an output interface, a processor, and a memory. The input interface, the output interface, the processor, and the memory are connected through an internal connection path. The processor is configured to execute code in the memory. When the code is executed, the processor is configured to perform the methods in the foregoing aspects.

### BRIEF DESCRIPTION OF DRAWINGS

FIG. 1 is a schematic diagram of an implementation environment according to an embodiment of this application;
FIG. 2 is a flowchart of a rendering model training method according to an embodiment of this application;
FIG. 3 is a schematic diagram of a frame before cropping and a cropped frame according to an embodiment of this application;
FIG. 4 is a flowchart of a video rendering method according to an embodiment of this application;
FIG. 5 is a schematic diagram of a rendering model training apparatus according to an embodiment of this application;
FIG. 6 is a schematic diagram of a video rendering apparatus according to an embodiment of this application;
FIG. 7 is a schematic diagram of a structure of an electronic device according to an embodiment of this application; and
FIG. 8 is a schematic diagram of a structure of a server according to an embodiment of this application.

### DESCRIPTION OF EMBODIMENTS

Terms used in implementations of this application are only used to explain specific embodiments of this application, but are not intended to limit this application.

A speech-driven virtual object is a new technology, and has attracted wide attention. Compared with a real object, a virtual object has advantages in controllability, risk, and cost. The speech-driven virtual object technology can be used to generate a corresponding virtual object video based on a segment of audio. The process includes: inputting a speech into a model for generating lip synchronization parameters, and generating the lip synchronization parameters by the model for generating the lip synchronization parameters based on the speech; and inputting the lip synchronization parameters into a virtual object generation model, and generating the virtual object video by the virtual object generation model based on the lip synchronization parameters.

When the virtual object generation model generates the virtual object video based on the lip synchronization parameters, the virtual object generation model drives the virtual object to perform a corresponding facial action based on the lip synchronization parameters. Then, a picture obtained after the virtual object performs the facial action is obtained through rendering of a rendering model included in the virtual object generation model, to obtain the virtual object video.

A rendering capability of the rendering model directly affects definition of the virtual object video. Therefore, to make the definition of the virtual object video higher, in the conventional technology, a rendering model is trained by using a large quantity of high-definition videos recorded based on high recording requirements and corresponding low-definition videos as samples, so that a higher-definition virtual object video can be obtained through rendering of the rendering model. However, in the conventional technology, it is difficult to obtain training samples, and training the rendering model requires a large quantity of computing resources and long time. In addition, the rendering model obtained through training in the conventional technology also requires a large quantity of computing resources during application, which is unfavorable to application on a terminal side.

In this regard, embodiments of this application provide a rendering model training method. In the method, a large quantity of low-definition videos recorded based on high recording requirements can be prevented from being used as samples to train a rendering model. This reduces computing resources and time required for training the rendering model. In addition, few computing resources are required when the rendering model is applied after training is completed, and the rendering model can be used on a terminal side. Embodiments of this application further provide a video rendering method. In the method, a rendering model for rendering a video is a rendering model obtained through training according to the rendering model training method provided in embodiments of this application. The method can be used to complete rendering of a video when definition of the input video is low.

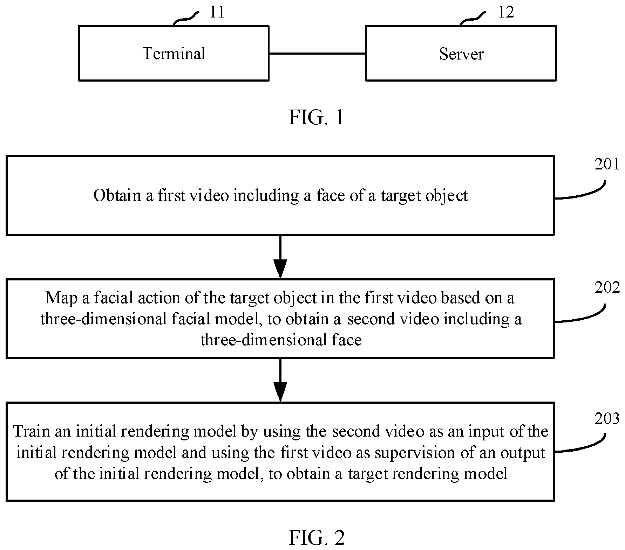

As shown in FIG. 1, an embodiment of this application provides an implementation environment. The implementation environment may include a terminal 11 and a server 12.

The terminal 11 may obtain required content, for example, a video, from the server 12. Optionally, the terminal 11 is configured with a photographing apparatus, and the terminal 11 may obtain the video through the photographing apparatus.

The rendering model training method provided in embodiments of this application may be performed by the terminal 11, or may be performed by the server 12, or may be jointly performed by the terminal 11 and the server 12. This is not limited in embodiments of this application. The video rendering method provided in embodiments of this application may be performed by the terminal 11, or may be performed by the server 12, or may be jointly performed by the terminal 11 and the server 12. This is not limited in embodiments of this application. In addition, the rendering model training method and the video rendering method provided in embodiments of this application may be performed by a same device, or may be performed by different devices. This is not limited in embodiments of this application.

In a possible implementation, the terminal 11 may be any electronic product that can perform human-computer interaction with a user in one or more manners such as a keyboard, a touchpad, a touchscreen, a remote control, a voice interaction device, or a handwriting device, for example, a PC (Personal Computer, personal computer), a mobile phone, a smartphone, a PDA (Personal Digital Assistant, personal digital assistant), a wearable device, a PPC (Pocket PC, pocket personal computer), a tablet computer, a smart head unit, a smart television, a smart speaker, a smart voice interaction device, a smart home appliance, or a vehicle-mounted terminal. The server 12 may be a server, a server cluster including a plurality of servers, or a cloud computing service center. The terminal 11 establishes a communication connection to the server 12 via a wired or wireless network.

A person skilled in the art should understand that the terminal 11 and the server 12 are merely examples. If another existing terminal or server or a terminal or server that may appear in the future is applicable to this application, the another existing terminal or server or the terminal or server that may appear in the future shall also fall within the protection scope of this application, and is incorporated herein by reference.

Based on the implementation environment shown in FIG. 1, an embodiment of this application provides a rendering model training method. An example in which the method is used on the terminal 11 is used. As shown in FIG. 2, the rendering model training method provided in this embodiment of this application may include the following step 201 to step 203.

Step 201: Obtain a first video including a face of a target object.

How to obtain the first video including the face of the target object is not limited in embodiments of this application. When the target object is speaking, moving, or the like, the face has a corresponding action. The action of the face may be recorded by a photographing apparatus to form a video including the face of the target object. Therefore, in an example embodiment, the obtaining a first video including a face of a target object includes: photographing the face of the target object by the photographing apparatus configured in the terminal, to obtain the first video including the face of the target object. In another example embodiment, the obtaining a first video including a face of a target object includes: obtaining a fourth video including the target object; and cropping each frame corresponding to the fourth video, and reserving a facial region of the target object in each frame corresponding to the fourth video, to obtain the first video.

Optionally, a manner of obtaining the first video including the face of the target object may alternatively be: After photographing the first video, another device other than the terminal transmits the first video to the terminal, so that the terminal completes obtaining of the first video.

Optionally, the fourth video may also be: After photographing the fourth video, the another device other than the terminal transmits the fourth video to the terminal, so that the terminal completes obtaining of the fourth video. Optionally, a server stores the fourth video. In this case, a manner of obtaining the fourth video may alternatively be directly obtaining the fourth video from the server.

In an example embodiment, the cropping each frame of the fourth video, and reserving a facial region of the target object in each frame of the fourth video, to obtain the first video includes: determining, by using an image recognition technology, a region corresponding to the face of the target object in each frame of the fourth video; cropping, from each frame of the fourth video by using an image segmentation technology, the region corresponding to the face of the target object, to obtain facial images with a same quantity as frames of the fourth video; and combining all the facial images based on a correspondence between each of the facial images and each frame of the fourth video, to obtain the first video.

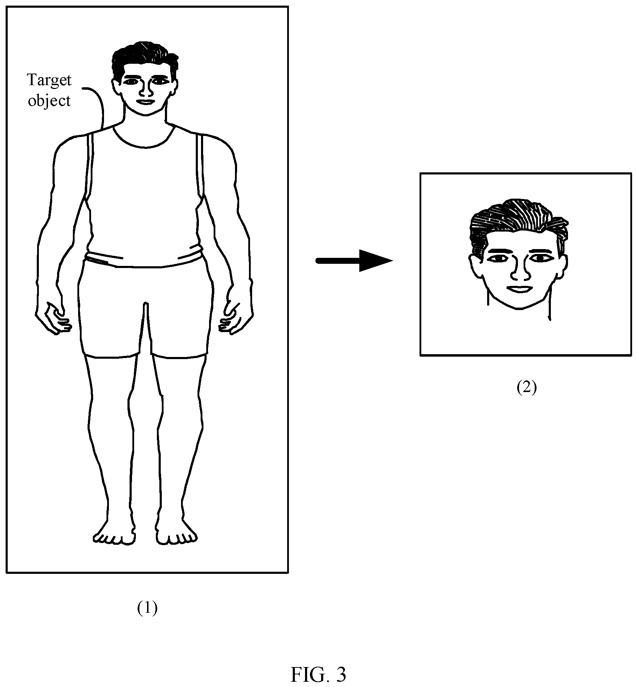

For example, a frame before cropping and a cropped frame are shown in FIG. 3. (1) in FIG. 3 is a frame of the fourth video, and (2) in FIG. 3 is a cropped facial image including the face of the target object. It should be noted that FIG. 3 is merely used to help understand embodiments of this application, and sizes of peripheral frame lines corresponding to (1) and (2) in FIG. 3 are irrelevant to sizes of corresponding pictures.

It should be noted that a sample for training a rendering model is related to usage of the rendering model. For example, if the rendering model is used to render a video including a tiger, a video including the tiger should be used as a training sample during training of the rendering model, that is, training of the rendering model is targeted. In this embodiment of this application, an example in which the rendering model is used to render a video including the target object is used for description, in other words, that the video including the target object is used as a sample for training the rendering model is used for description. When the rendering model is used to render another type of video, the rendering model training method provided in this embodiment of this application may also be used to train the rendering model.

Step 202: Map a facial action of the target object in the first video based on a three-dimensional face model, to obtain a second video including a three-dimensional face.

For example, the three-dimensional face model is a three-dimensional model including a face pattern. In an example embodiment, before the mapping a facial action of the target object in the first video based on a three-dimensional face model, to obtain a second video including a three-dimensional face, the method further includes: obtaining the three-dimensional face model. In an example embodiment, the three-dimensional face model is pre-stored in a memory of the terminal. In this case, the obtaining the three-dimensional face model includes: obtaining the three-dimensional face model from the memory. In another example embodiment, when the three-dimensional face model is pre-stored in the server, the obtaining the three-dimensional face model includes: obtaining the three-dimensional face model from the server via a communication network. A specific type of the three-dimensional face model is not limited in embodiments of this application. Optionally, the three-dimensional face model used in this embodiment of this application may be a three-dimensional morphable face model (3 dimensions morphable face model, 3DMM).

In an example embodiment, the mapping a facial action of the target object in the first video based on a three-dimensional face model, to obtain a second video including a three-dimensional face includes: extracting facial key points of the target object in each frame of the first video, to obtain a plurality of groups of facial key points, where a quantity of groups of facial key points is the same as a quantity of frames of the first video, and one frame corresponds to one group of facial key points; fitting the three-dimensional face model with each group of facial key points to obtain a plurality of three-dimensional facial pictures; and combining the plurality of three-dimensional facial pictures based on a correspondence between each of the three-dimensional facial pictures and each frame of the first video, to obtain the second video including the three-dimensional face.

The three-dimensional face model is introduced, and the second video generated based on the three-dimensional face model is used as a sample for training the rendering model, so as to avoid recording a large quantity of low-definition videos because of high recording requirements before the rendering model is trained, thereby reducing computing resources and time used for training the rendering model.

In an example embodiment, the extracting facial key points of the target object in each frame of the first video, to obtain a plurality of groups of facial key points includes: determining locations of the facial key points in each frame of the first video; and extracting coordinates of the locations of the facial key points in each frame of the first video, to obtain the plurality of groups of facial key points, where the quantity of groups of facial key points is the same as the quantity of frames of the first video, and one frame corresponds to one group of facial key points.

In an example embodiment, the determining locations of the facial key points in each frame of the first video includes: determining the locations of the facial key points in each frame of the first video by using a neural network for determining key locations. After a location of each facial key point is determined, coordinates corresponding to the location may be directly determined based on the location of the facial key point, to obtain the coordinates of each facial key point. Further, coordinates of the locations of the facial key points in each frame of the first video are extracted, to obtain the plurality of groups of facial key points.

In an example embodiment, the facial key points of the target object include, but are not limited to, a head key point, a lip key point, an eye key point, and an eyebrow key point. A quantity of key points in each group of facial key points is not limited in embodiments of this application, and may be set based on experience. In an example embodiment, the facial key points are distributed in set regions, for example, 20 facial key points are distributed in a lip region, six key points are distributed in each of a left eye region and a right eye region, 17 key points are distributed in a head (cheek) region, five key points are distributed in each of a left eyebrow region and a right eyebrow region, and nine key points are distributed in a nose region. The facial key points have good stability. Therefore, when definition of the first video is low, the facial key points of the target object can be well extracted from the first video, and then the extracted facial key points of the target object are fitted with the three-dimensional face model to obtain the second video. In other words, a manner of generating the second video by fitting the extracted facial key points of the target object in the first video with the three-dimensional face model is highly stable and is less affected by the definition of the first video. When the definition of the first video is low, the second video can also be well generated.

How to fit the three-dimensional face model with each group of facial key points is not limited in embodiments of this application. Optionally, the three-dimensional face model may be fitted with each group of facial key points by using a neural network, to obtain the plurality of three-dimensional facial pictures. For example, the neural network for fitting the three-dimensional face model with the facial key points is a residual neural network (residual neural network, ResNet). Optionally, the three-dimensional face model may be alternatively fitted with each group of facial key points based on a Bayesian model.

The three-dimensional facial picture is a picture obtained by fitting the facial key points extracted from each frame of the first video with the three-dimensional face model. Therefore, one three-dimensional facial picture corresponds to one frame of the first video. In an example embodiment, the plurality of three-dimensional facial pictures may be combined into the second video including the three-dimensional face based on the correspondence between each of the three-dimensional facial pictures and each frame of the first video.

Step 203: Train an initial rendering model by using the second video as an input of the initial rendering model and using the first video as supervision of an output of the initial rendering model, to obtain a target rendering model.

In an example embodiment, the training an initial rendering model by using the second video as an input of the initial rendering model and using the first video as supervision of an output of the initial rendering model, to obtain a target rendering model includes: inputting the second video into the initial rendering model, and rendering the second video by using the initial rendering model to obtain a third video; calculating a similarity between each frame of the first video and each frame of the third video; and adjusting a parameter of the initial rendering model based on the similarity, and using an initial rendering model obtained after the parameter adjusting as the target rendering model. The rendering model is trained by using the second video generated in a manner of extracting the facial key points, so that the trained rendering model has a better generalization capability. The similarity indicates a degree of similarity between the third video and the first video, and a higher similarity indicates a better rendering capability of the initial rendering model. An objective of training the initial rendering model is to make the third video output by rendering the second video by using the initial rendering model as similar to the first video as possible.

The initial rendering model may be any rendering model, and is not limited in embodiments of this application. Optionally, the initial rendering model may be a generative adversarial network (generative adversarial network, GAN) model, a convolutional neural network (convolutional neural network, CNN) model, or a U-Net model.

In some embodiments, the initial rendering model includes a pre-training layer, the pre-training layer is at least one network layer in the initial rendering model, and a quantity of network layers included in the pre-training layer is less than a total quantity of network layers in the initial rendering model. In this case, when the parameter of the initial rendering model is adjusted, all parameters of the initial rendering model do not need to be adjusted, and only a weight of the pre-training layer needs to be adjusted. In an example embodiment, the adjusting a parameter of the initial rendering model based on the similarity, and using an initial rendering model obtained after the parameter adjusting as the target rendering model includes: adjusting the weight of the pre-training layer in the initial rendering model based on the similarity, and using an initial rendering model obtained after the weight adjusting as the target rendering model.

In an example embodiment, the pre-training layer includes a reference quantity of network layers from back to front in network layers corresponding to the initial rendering model. For example, the initial rendering model includes five network layers A, B, C, D, and E from front to back. If a reference quantity corresponding to the pre-training layer is 2, network layers included in the pre-training layer are D and E. If a reference quantity corresponding to the pre-training layer is 3, network layers included in the pre-training layer are C, D, and E. The quantity of network layers included in the pre-training layer is not limited in embodiments of this application, and may be set based on experience, or may be set based on an application scenario. For example, the initial rendering model is the CNN model, and the CNN model includes an input layer, a plurality of convolutional layers, a pooling layer, and a fully connected layer. The pre-training layer includes some of the plurality of convolutional layers, the pooling layer, and the fully connected layer. Because the pre-training layer includes some of the network layers corresponding to the rendering model, adjusting the weight of the pre-training layer involves a small quantity of network layers, and further, adjusting the weight of the pre-training layer requires few computing resources. This correspondingly improves efficiency of training the rendering model.

When the parameter of the initial rendering model is adjusted, an effect that is achieved by the initial rendering model obtained after the parameter adjusting to enable the initial rendering model to be used as the target rendering model needs to be determined. The effect that is achieved by the initial rendering model to enable the initial rendering model to be used as the target rendering model is not limited in embodiments of this application. Optionally, the using an initial rendering model obtained after the parameter adjusting as the target rendering model includes: using the initial rendering model obtained after the parameter adjusting as the target rendering model in response to a similarity between each frame of a video generated based on the initial rendering model obtained after the parameter adjusting and each frame of the first video being not less than a similarity threshold.

The three-dimensional face model is introduced during training of the rendering model, and the rendering model is trained by using the second video generated based on the three-dimensional face model. This can reduce a quantity of samples required when the rendering model is trained. Generally, training of the rendering model can be completed by using the second video of only a few minutes and the corresponding first video. Definition of the video obtained through rendering of the rendering model is strongly related to the definition of the first video. Therefore, the first video is usually a high-definition video, so that a high-definition video can be obtained through rendering of the rendering model obtained through training by using the first video and the second video.

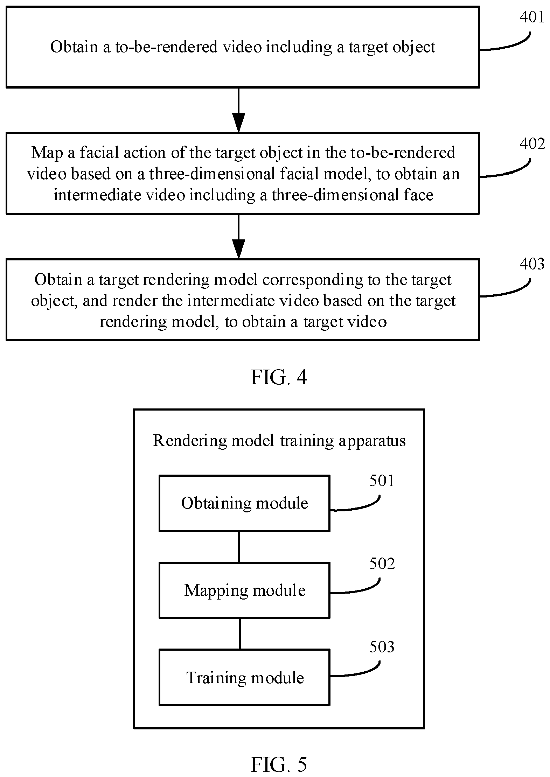

Based on the implementation environment shown in FIG. 1, an embodiment of this application provides a video rendering method. An example in which the method is used on the terminal 11 is used. As shown in FIG. 4, the video rendering method provided in this embodiment of this application may include the following step 401 to step 403.

Step 401: Obtain a to-be-rendered video including a target object.

In an example embodiment, the to-be-rendered video is a virtual object video, and the virtual object video is generated by using a virtual object generation model established based on the target object. In other words, the to-be-rendered video is generated by the virtual object generation model established based on the target object. Optionally, the to-be-rendered video may be generated by the terminal. Alternatively, after the to-be-rendered video is generated by another device other than the terminal, the another device other than the terminal sends the to-be-rendered video to the terminal. In this embodiment of this application, an example in which the terminal generates the to-be-rendered video based on the virtual object generation model is used for description. In this case, the obtaining a to-be-rendered video including a target object includes: obtaining the virtual object generation model established based on the target object; and generating the to-be-rendered video based on the virtual object generation model.

Certainly, in this embodiment of this application, an example in which the to-be-rendered video is the virtual object video is used for description. However, it does not mean that the to-be-rendered video may be only the virtual object video. The to-be-rendered video may alternatively be a video obtained by directly photographing the target object, or a video that includes the target object and is generated in another manner.

Optionally, the virtual object generation model used in this embodiment of this application may be a lip-sync wave2lip model, or may be any other virtual object generation model. This is not limited in embodiments of this application.

In an example embodiment, the virtual object generation model established based on the target object is stored in a memory of the terminal, and the obtaining the virtual object generation model established based on the target object includes: directly obtaining the virtual object generation model from the memory of the terminal. In another example embodiment, the virtual object generation model is stored in a memory of a server, and the obtaining the virtual object generation model established based on the target object includes: obtaining the virtual object generation model from the server. The virtual object generation model established based on the target object is a trained virtual object generation model, and can drive a virtual object to perform a corresponding facial action based on lip synchronization parameters, to generate the video including the target object.

In an example embodiment, the generating the to-be-rendered video based on the virtual object generation model includes: obtaining text for generating the to-be-rendered video; converting the text into a speech of the target object, where content of the speech corresponds to content of the text; obtaining at least one group of lip synchronization parameters based on the speech; inputting the at least one group of lip synchronization parameters into the virtual object generation model, where the virtual object generation model drives a face of a virtual object corresponding to the target object to perform a corresponding action based on the at least one group of lip synchronization parameters, to obtain a virtual video corresponding to the at least one group of lip synchronization parameters; and rendering the virtual video to obtain the to-be-rendered video. The virtual object generation model includes the virtual object corresponding to the target object. Generally, each frame of the to-be-rendered video is a static picture, and in the static picture, a lip corresponds to a specific shape. A group of lip synchronization parameters are used to drive the virtual object to generate a corresponding frame of the to-be-rendered video.

Optionally, the text for generating the to-be-rendered video is manually input into the terminal. After detecting the input text, the terminal correspondingly completes obtaining of the text for generating the to-be-rendered video. Optionally, the text for generating the to-be-rendered video is manually input to the another device other than the terminal, and the another device sends the text to the terminal. In this case, the obtaining text for generating the to-be-rendered video includes: receiving the text that is sent by the another device and that is used to generate the to-be-rendered video.

In an example embodiment, the converting the text into a speech of the target object includes: converting the text into the speech of the target object based on any model that can convert text into a speech. The any model that can convert text into a speech is obtained through audio training of the target object, so that the any model that can convert text into a speech has a capability of converting the text into the speech of the target object. For example, the any model that can convert text into a speech may be a Char2Wav model (a speech synthesis model).

In an example embodiment, the obtaining at least one group of lip synchronization parameters based on the speech includes: inputting the speech into a neural network model for generating the lip synchronization parameters based on audio; and generating, by using the neural network model, the at least one group of lip synchronization parameters based on the speech. For example, the neural network model for generating the lip synchronization parameters based on the audio may be a long short-term memory (long short-term memory, LSTM) network model.

Step 402: Map a facial action of the target object in the to-be-rendered video based on a three-dimensional face model, to obtain an intermediate video including a three-dimensional face.

Before the mapping a facial action of the target object in the to-be-rendered video based on a three-dimensional face model, to obtain an intermediate video including a three-dimensional face, the method further includes: obtaining the three-dimensional face model. How to obtain the three-dimensional face model has been described in step 202 in the embodiment of the rendering model training method corresponding to FIG. 2. Details are not described herein again.

In an example embodiment, the mapping a facial action of the target object in the to-be-rendered video based on a three-dimensional face model, to obtain an intermediate video including a three-dimensional face includes: cropping each frame of the to-be-rendered video, and reserving a facial region of the target object in each frame of the to-be-rendered video, to obtain a face video; and mapping the facial action of the target object in the face video based on the three-dimensional face model, to obtain the intermediate video.

For an implementation of cropping each frame of the to-be-rendered video, and reserving a facial region of the target object in each frame of the to-be-rendered video, to obtain a face video, refer to step 201 of cropping the fourth video to obtain the first video in the rendering model training method corresponding to FIG. 2. Details are not described herein again. For an implementation of mapping the face of the target object in the face video based on the three-dimensional face model, to obtain the intermediate video, refer to step 202 in the rendering model training method corresponding to FIG. 2. Details are not described herein again.

Step 403: Obtain a target rendering model corresponding to the target object; and render the intermediate video based on the target rendering model, to obtain a target video.

In an example embodiment, the target rendering model is sent to the terminal after training is completed in the another device other than the terminal. In this case, the obtaining a target rendering model corresponding to the target object includes: receiving the target rendering model sent by the another device. In another example embodiment, the target rendering model finishes training in the terminal and is stored in the memory of the terminal. In this case, the obtaining a target rendering model corresponding to the target object includes: obtaining the target rendering model from the memory. For example, the target rendering model is the target rendering model obtained through training according to the rendering model training method corresponding to FIG. 2.

Definition of a video obtained through rendering of the target rendering model is determined by definition of a supervised sample of the target rendering model obtained through training. Therefore, when the definition of the supervised sample is higher than definition of the to-be-rendered video, definition of the target video output after the intermediate video is rendered by using the target rendering model is higher than the definition of the to-be-rendered video.

In an example embodiment, the rendering the intermediate video based on the target rendering model, to obtain a target video includes: rendering each frame of the intermediate video based on the target rendering model, to obtain rendered pictures with a same quantity as frames of the intermediate video; and combining the rendered pictures based on a correspondence between each of the rendered pictures and each frame of the intermediate video, to obtain the target video. The definition of the target video corresponds to definition of a supervised video for obtaining the target rendering model through training.

When the definition of the to-be-rendered video generated by the virtual object generation model is low, and the definition of the supervised sample corresponding to the target rendering model is high, the to-be-rendered video may be rendered by using the target rendering model, to obtain the high-definition target video. In other words, the low-definition virtual object generation model and the target rendering model are used together, so that the terminal can generate the high-definition target video when few computing resources are used.

The foregoing describes the rendering model training method and the video rendering method in embodiments of this application. Corresponding to the foregoing methods, embodiments of this application further provide a rendering model training apparatus and a video rendering apparatus. As shown in FIG. 5, an embodiment of this application further provides a rendering model training apparatus. The apparatus includes:
an obtaining module 501, configured to obtain a first video including a face of a target object;
a mapping module 502, configured to map a facial action of the target object in the first video based on a three-dimensional face model, to obtain a second video including a three-dimensional face; and
a training module 503, configured to train an initial rendering model by using the second video as an input of the initial rendering model and using the first video as supervision of an output of the initial rendering model, to obtain a target rendering model.

In a possible implementation, the mapping module 502 is configured to: extract facial key points of the target object in each frame of the first video, to obtain a plurality of groups of facial key points, where a quantity of groups of facial key points is the same as a quantity of frames of the first video, and one frame corresponds to one group of facial key points; fit the three-dimensional face model with each group of facial key points to obtain a plurality of three-dimensional facial pictures; and combine the plurality of three-dimensional facial pictures based on a correspondence between each of the three-dimensional facial pictures and each frame of the first video, to obtain the second video including the three-dimensional face.

In a possible implementation, the mapping module 502 is configured to fit the three-dimensional face model with each group of facial key points by using a neural network, to obtain the plurality of three-dimensional facial pictures.

In a possible implementation, the training module 503 is configured to: input the second video into the initial rendering model, and render the second video by using the initial rendering model to obtain a third video; calculate a similarity between each frame of the first video and each frame of the third video; and adjust a parameter of the initial rendering model based on the similarity, and use an initial rendering model obtained after the parameter adjusting as the target rendering model.

In a possible implementation, the training module 503 is configured to: adjust a weight of a pre-training layer in the initial rendering model based on the similarity, and use an initial rendering model obtained after the weight adjusting as the target rendering model, where the pre-training layer is at least one network layer in the initial rendering model, and a quantity of network layers included in the pre-training layer is less than a total quantity of network layers in the initial rendering model.

In a possible implementation, the training module 503 is configured to use the initial rendering model obtained after the parameter adjusting as the target rendering model in response to a similarity between each frame of a video generated based on the initial rendering model obtained after the parameter adjusting and each frame of the first video being not less than a similarity threshold.

In a possible implementation, the obtaining module 501 is configured to: obtain a fourth video including the target object; and crop each frame of the fourth video, and reserve a facial region of the target object in each frame of the fourth video, to obtain the first video.

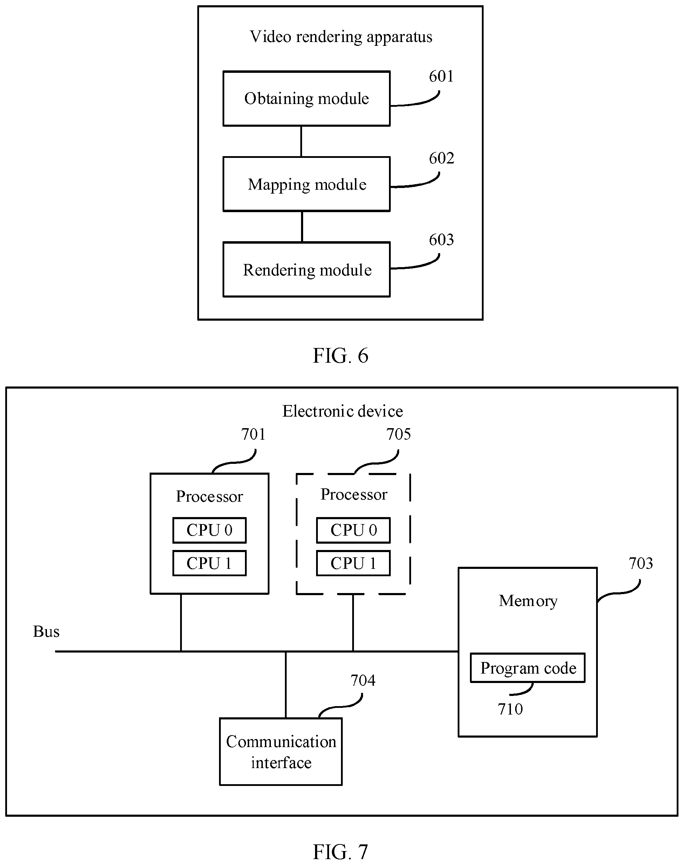

As shown in FIG. 6, an embodiment of this application further provides a video rendering apparatus. The apparatus includes:
an obtaining module 601, configured to obtain a to-be-rendered video including a target object;
a mapping module 602, configured to map a facial action of the target object in the to-be-rendered video based on a three-dimensional face model, to obtain an intermediate video including a three-dimensional face, where
the obtaining module 601 is further configured to obtain a target rendering model corresponding to the target object; and
a rendering module 603, configured to render the intermediate video based on the target rendering model, to obtain a target video.

In a possible implementation, the obtaining module 601 is configured to: obtain a virtual object generation model established based on the target object; and generate the to-be-rendered video based on the virtual object generation model.

In a possible implementation, the obtaining module 601 is configured to: obtain text for generating the to-be-rendered video; convert the text into a speech of the target object, where content of the speech corresponds to content of the text; obtain at least one group of lip synchronization parameters based on the speech; input the at least one group of lip synchronization parameters into the virtual object generation model, where the virtual object generation model drives a face of a virtual object corresponding to the target object to perform a corresponding action based on the at least one group of lip synchronization parameters, to obtain a virtual video corresponding to the at least one group of lip synchronization parameters; and render the virtual video to obtain the to-be-rendered video.

In a possible implementation, the rendering module 603 is configured to: render each frame of the intermediate video based on the target rendering model, to obtain a same quantity of rendered pictures as a quantity of frames of the intermediate video; and combine the rendered pictures based on a correspondence between each of the rendered pictures and each frame of the intermediate video, to obtain the target video.

In a possible implementation, the mapping module 602 is configured to: crop each frame of the to-be-rendered video, and reserve a facial region of the target object in each frame of the to-be-rendered video, to obtain a face video; and map the facial action of the target object in the face video based on the three-dimensional face model, to obtain the intermediate video.

It should be understood that, when the apparatuses provided in FIG. 5 and FIG. 6 implement functions of the apparatuses, division into the foregoing functional modules is merely used as an example for description. In actual application, the foregoing functions may be allocated to different functional modules for implementation based on a requirement, in other words, an internal structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein again.

FIG. 7 is a schematic diagram of a structure of an electronic device according to an example embodiment of this application. The electronic device shown in FIG. 7 is configured to perform operations related to the rendering model training method shown in FIG. 2 or the video rendering method shown in FIG. 4. The electronic device is, for example, a terminal, and the electronic device may be implemented by using a general bus architecture.

As shown in FIG. 7, the electronic device includes at least one processor 701, a memory 703, and at least one communication interface 704.

The processor 701 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 701 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field programmable gate array (field programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the electronic device further includes a bus. The bus is used to transfer information between components of the electronic device. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one line is used in FIG. 7 for representation, but it does not mean that there is only one bus or one type of bus.

The memory 703 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 703 exists independently, and is connected to the processor 701 through the bus. Alternatively, the memory 703 may be integrated into the processor 701.

The communication interface 704 uses any apparatus such as a transceiver, and is configured to communicate with another device or a communication network. The communication network may be the Ethernet, a radio access network (RAN), a wireless local area network (wireless local area network, WLAN), or the like. The communication interface 704 may include a wired communication interface, and may further include a wireless communication interface. For example, the communication interface 704 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 704 may be used by the electronic device to communicate with another device.

In an embodiment, the processor 701 may include one or more CPUs, such as a CPU 0 and a CPU 1 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the electronic device may include a plurality of processors, such as the processor 701 and a processor 705 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the electronic device may further include an output device and an input device. The output device communicates with the processor 701, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 701, and may receive an input from a user in a plurality of manners. For example, the input device may be a mouse, a keyboard, a touchscreen device, or a sensing device.

In some embodiments, the memory 703 is configured to store program code 710 for executing the solutions of this application, and the processor 701 may execute the program code 710 stored in the memory 703. In other words, the electronic device may implement the rendering model training method or the video rendering method provided in the method embodiment by using the processor 701 and the program code 710 in the memory 703. The program code 710 may include one or more software modules. Optionally, the processor 701 may alternatively store program code or instructions for performing the solutions of this application.

The steps of the rendering model training method shown in FIG. 2 or the video rendering method shown in FIG. 4 are completed by using an integrated logic circuit of hardware in the processor of the electronic device or instructions in a form of software. The steps of the method disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

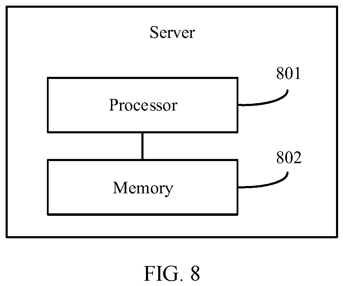

FIG. 8 is a schematic diagram of a structure of a server according to an embodiment of this application. The server may greatly differ due to different configurations or performance, and may include one or more processors (central processing units, CPUs) 801 and one or more memories 802. The one or more memories 802 store at least one computer program, and the at least one computer program is loaded and executed by the one or more processors 801, so that the server implements the rendering model training method or the video rendering method provided in the foregoing method embodiments. Certainly, the server may further have components such as a wired or wireless network interface, a keyboard, and an input/output interface, to perform input/output. The server may further include another component configured to implement a function of the device. Details are not described herein.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, the processor is enabled to perform the rendering model training method or the video rendering method.

It should be understood that the processor may be a CPU, or may be another general-purpose processor, a digital signal processor (digital signal processing, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, so that a computer implements the rendering model training method or the video rendering method.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to invoke instructions from a memory and run the instructions stored in the memory, so that a communication device on which the chip is installed performs the rendering model training method or the video rendering method.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform the rendering model training method or the video rendering method.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedures or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state disk (solid-state disk)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, or an optical disc.

When software is used to implement the embodiments, all or some of the embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a special-purpose computer, or another programmable data processing apparatus, so that when the program code is executed by the computer or the another programmable data processing apparatus, the function/operation specified in the flowchart and/or block diagram is implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division into logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in the form of the software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items that have basically same functions. It should be understood that "first", "second", and "n^{th}" do not have a logical or time sequential dependency relationship, and do not limit the quantity and execution sequence. It should be further understood that although the following description uses terms such as "first" and "second" to describe various elements, these elements should not be limited by the terms. These terms are simply used to distinguish one element from another element. For example, a first image may be referred to as a second image, and similarly, a second image may be referred to as a first image without departing from the scope of the various examples. Both the first image and the second image may be images, and in some cases, may be separate and different images.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" in this application means two or more. For example, a plurality of second packets means two or more second packets. The terms "system" and "network" are often used interchangeably in this specification.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "on condition that" may be interpreted to mean "when" ("when" or "upon") or "in response to determining" or "in response to detecting". Similarly, based on the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the first video including the face of the target object in this application is obtained with full authorization.

## Claims

1. A rendering model training method, wherein the method comprises:
obtaining a first video comprising a face of a target object;
mapping a facial action of the target object in the first video based on a three-dimensional face model, to obtain a second video comprising a three-dimensional face; and
training an initial rendering model by using the second video as an input of the initial rendering model and using the first video as supervision of an output of the initial rendering model, to obtain a target rendering model.

2. The method according to claim 1, wherein the mapping a facial action of the target object in the first video based on a three-dimensional face model, to obtain a second video comprising a three-dimensional face comprises:
extracting facial key points of the target object in each frame of the first video, to obtain a plurality of groups of facial key points, wherein a quantity of groups of facial key points is the same as a quantity of frames of the first video, and one frame corresponds to one group of facial key points;
fitting the three-dimensional face model with each group of facial key points to obtain a plurality of three-dimensional facial pictures; and
combining the plurality of three-dimensional facial pictures based on a correspondence between each of the three-dimensional facial pictures and each frame of the first video, to obtain the second video comprising the three-dimensional face.

3. The method according to claim 2, wherein the fitting the three-dimensional face model with each group of facial key points to obtain a plurality of three-dimensional facial pictures comprises:
fitting the three-dimensional face model with each group of facial key points by using a neural network, to obtain the plurality of three-dimensional facial pictures.

4. The method according to any one of claims 1 to 3, wherein the training an initial rendering model by using the second video as an input of the initial rendering model and using the first video as supervision of an output of the initial rendering model, to obtain a target rendering model comprises:
inputting the second video into the initial rendering model, and rendering the second video by using the initial rendering model to obtain a third video;
calculating a similarity between each frame of the first video and each frame of the third video; and
adjusting a parameter of the initial rendering model based on the similarity, and using an initial rendering model obtained after the parameter adjusting as the target rendering model.

5. The method according to claim 4, wherein the adjusting a parameter of the initial rendering model based on the similarity, and using an initial rendering model obtained after the parameter adjusting as the target rendering model comprises:
adjusting a weight of a pre-training layer in the initial rendering model based on the similarity, and using an initial rendering model obtained after the weight adjusting as the target rendering model, wherein the pre-training layer is at least one network layer in the initial rendering model, and a quantity of network layers comprised in the pre-training layer is less than a total quantity of network layers in the initial rendering model.

6. The method according to claim 4 or 5, wherein the using an initial rendering model obtained after the parameter adjusting as the target rendering model comprises:
using the initial rendering model obtained after the parameter adjusting as the target rendering model in response to a similarity between each frame of a video generated based on the initial rendering model obtained after the parameter adjusting and each frame of the first video being not less than a similarity threshold.

7. The method according to any one of claims 1 to 6, wherein the obtaining a first video comprising a face of a target object comprises:
obtaining a fourth video comprising the target object; and
cropping each frame of the fourth video, and reserving a facial region of the target object in each frame of the fourth video, to obtain the first video.

8. A video rendering method, wherein the method comprises:
obtaining a to-be-rendered video comprising a target object;
mapping a facial action of the target object in the to-be-rendered video based on a three-dimensional face model, to obtain an intermediate video comprising a three-dimensional face;
obtaining a target rendering model corresponding to the target object; and
rendering the intermediate video based on the target rendering model, to obtain a target video.

9. The method according to claim 8, wherein the obtaining a to-be-rendered video comprising a target object comprises:
obtaining a virtual object generation model established based on the target object; and
generating the to-be-rendered video based on the virtual object generation model.

10. The method according to claim 9, wherein the generating the to-be-rendered video based on the virtual object generation model comprises:
obtaining text for generating the to-be-rendered video;
converting the text into a speech of the target object, wherein content of the speech corresponds to content of the text;
obtaining at least one group of lip synchronization parameters based on the speech;
inputting the at least one group of lip synchronization parameters into the virtual object generation model, wherein the virtual object generation model drives a face of a virtual object corresponding to the target object to perform a corresponding action based on the at least one group of lip synchronization parameters, to obtain a virtual video corresponding to the at least one group of lip synchronization parameters; and
rendering the virtual video to obtain the to-be-rendered video.

11. The method according to any one of claims 8 to 10, wherein the rendering the intermediate video based on the target rendering model, to obtain a target video comprises:
rendering each frame of the intermediate video based on the target rendering model, to obtain rendered pictures with a same quantity as frames of the intermediate video; and
combining the rendered pictures based on a correspondence between each of the rendered pictures and each frame of the intermediate video, to obtain the target video.

12. The method according to any one of claims 8 to 11, wherein the mapping a facial action of the target object in the to-be-rendered video based on a three-dimensional face model, to obtain an intermediate video comprising a three-dimensional face comprises:
cropping each frame of the to-be-rendered video, and reserving a facial region of the target object in each frame of the to-be-rendered video, to obtain a face video; and
mapping the facial action of the target object in the face video based on the three-dimensional face model, to obtain the intermediate video.

13. A rendering model training apparatus, wherein the apparatus comprises:
an obtaining module, configured to obtain a first video comprising a face of a target object;
a mapping module, configured to map a facial action of the target object in the first video based on a three-dimensional face model, to obtain a second video comprising a three-dimensional face; and
a training module, configured to train an initial rendering model by using the second video as an input of the initial rendering model and using the first video as supervision of an output of the initial rendering model, to obtain a target rendering model.

14. The apparatus according to claim 13, wherein the mapping module is configured to: extract facial key points of the target object in each frame of the first video, to obtain a plurality of groups of facial key points, wherein a quantity of groups of facial key points is the same as a quantity of frames of the first video, and one frame corresponds to one group of facial key points; fit the three-dimensional face model with each group of facial key points to obtain a plurality of three-dimensional facial pictures; and combine the plurality of three-dimensional facial pictures based on a correspondence between each of the three-dimensional facial pictures and each frame of the first video, to obtain the second video comprising the three-dimensional face.

15. The apparatus according to claim 14, wherein the mapping module is configured to fit the three-dimensional face model with each group of facial key points by using a neural network, to obtain the plurality of three-dimensional facial pictures.

16. The apparatus according to any one of claims 13 to 15, wherein the training module is configured to: input the second video into the initial rendering model, and render the second video by using the initial rendering model to obtain a third video; calculate a similarity between each frame of the first video and each frame of the third video; and adjust a parameter of the initial rendering model based on the similarity, and use an initial rendering model obtained after the parameter adjusting as the target rendering model.

17. The apparatus according to claim 16, wherein the training module is configured to: adjust a weight of a pre-training layer in the initial rendering model based on the similarity, and use an initial rendering model obtained after the weight adjusting as the target rendering model, wherein the pre-training layer is at least one network layer in the initial rendering model, and a quantity of network layers comprised in the pre-training layer is less than a total quantity of network layers in the initial rendering model.

18. The apparatus according to claim 16 or 17, wherein the training module is configured to use the initial rendering model obtained after the parameter adjusting as the target rendering model in response to a similarity between each frame of a video generated based on the initial rendering model obtained after the parameter adjusting and each frame of the first video being not less than a similarity threshold.

19. The apparatus according to any one of claims 13 to 18, wherein the obtaining module is configured to: obtain a fourth video comprising the target object; and crop each frame of the fourth video, and reserve a facial region of the target object in each frame of the fourth video, to obtain the first video.

20. A video rendering apparatus, wherein the apparatus comprises:
an obtaining module, configured to obtain a to-be-rendered video comprising a target object;
a mapping module, configured to map a facial action of the target object in the to-be-rendered video based on a three-dimensional face model, to obtain an intermediate video comprising a three-dimensional face, wherein
the obtaining module is further configured to obtain a target rendering model corresponding to the target object; and
a rendering module, configured to render the intermediate video based on the target rendering model, to obtain a target video.

21. The apparatus according to claim 20, wherein the obtaining module is configured to: obtain a virtual object generation model established based on the target object; and generate the to-be-rendered video based on the virtual object generation model.

22. The apparatus according to claim 21, wherein the obtaining module is configured to: obtain text for generating the to-be-rendered video; convert the text into a speech of the target object, wherein content of the speech corresponds to content of the text; obtain at least one group of lip synchronization parameters based on the speech; input the at least one group of lip synchronization parameters into the virtual object generation model, wherein the virtual object generation model drives a face of a virtual object corresponding to the target object to perform a corresponding action based on the at least one group of lip synchronization parameters, to obtain a virtual video corresponding to the at least one group of lip synchronization parameters; and render the virtual video to obtain the to-be-rendered video.

23. The apparatus according to any one of claims 20 to 22, wherein the rendering module is configured to: render each frame of the intermediate video based on the target rendering model, to obtain a same quantity of rendered pictures as a quantity of frames of the intermediate video; and combine the rendered pictures based on a correspondence between each of the rendered pictures and each frame of the intermediate video, to obtain the target video.

24. The apparatus according to any one of claims 20 to 23, wherein the mapping module is configured to: crop each frame of the to-be-rendered video, and reserve a facial region of the target object in each frame of the to-be-rendered video, to obtain a face video; and map the facial action of the target object in the face video based on the three-dimensional face model, to obtain the intermediate video.

25. A computer device, wherein the computer device comprises a memory and a processor, wherein the memory stores at least one instruction, and the at least one instruction is loaded and executed by the processor, so that the computer device implements the rendering model training method according to any one of claims 1 to 7 or the video rendering method according to any one of claims 8 to 12.

26. A computer-readable storage medium, wherein the computer-readable storage medium stores at least one instruction, and the instruction is loaded and executed by a processor to implement the rendering model training method according to any one of claims 1 to 7 or the video rendering method according to any one of claims 8 to 12.

27. A computer program product, wherein the computer program product comprises a computer program/instructions, and the computer program/instructions is/are executed by a processor, so that a computer implements the rendering model training method according to any one of claims 1 to 7 or the video rendering method according to any one of claims 8 to 12.
